# FASCICULE DE BREVET EUROPEEN

(11) **EP 0 617 816 B1**
(45) Date de publication et mention de la délivrance du brevet: **26.06.1996**
(21) Numéro de dépôt: 93902337.0
(22) Date de dépôt: 16.12.1992
(51) Int. Cl.: G06K 7/08, G06K 19/04

(54) **SYSTEME POUR L'IDENTIFICATION DE RECIPIENTS ET NOTAMMENT DE BOUTEILLES DE GAZ**
VORRICHTUNG ZUR IDENTIFIZIERUNG VON BEHAELTERN UND INSBESONDERE VON GASFLASCHEN
CONTAINER IDENTIFICATION SYSTEM, PARTICULARLY FOR GAS CYLINDERS

(30) Priorité: 20.12.1991 FR 9115953
(43) Date de publication de la demande: 05.10.1994
(73) Titulaire: GEMPLUS CARD INTERNATIONAL S.A., F-13420 Gémenos (FR)
(72) Inventeur: FALLAH, Michel, F-13400 Aubagne (FR); LEDUC, Michel, F-13530 Trets (FR)
(74) Mandataire: Schmit, Christian Norbert Marie
(86) Numéro de dépôt international: FR9201191
(87) Numéro de publication internationale: WO9313494

(56) Documents cités:
- EP-A- 0 176 090
- WO-A-86/04878
- WO-A-91/03027
- FR-A- 2 499 273
- FR-A- 2 623 311
- GB-A- 2 077 555
- US-A- 4 521 676

## Description

La présente invention concerne un système pour l'identification de récipients, et notamment de bouteilles de gaz.

Il est connu pour repérer et identifier, par exemple des bouteilles de gaz dans les usines de remplissage, d'apposer sur celles-ci des étiquettes. Les numéros portés sur celles-ci permettent en effet d'assurer un suivi lors des opérations qui précèdent ou succèdent leur remplissage en usine. Ce suivi est assuré notamment lors des opérations de tri des bouteilles, lors de leur déchargement des camions transporteurs, lors de leur remplissage et de leur conditionnement dans les casiers de livraison, mais aussi lors de la rédaction des bons de livraison ainsi que de leur livraison chez les clients.

Pour éviter que les étiquettes soient endommagées ou puissent être détachées des bouteilles lors des manipulations en usine ou lors du transport de celles-ci, des précautions sont généralement prises pour leur assurer une protection mécanique sur les bouteilles. Une protection efficace consiste, par exemple, à fixer les étiquettes à l'intérieur d'une pièce en forme de tulipe enveloppant généralement le robinet des bouteilles, ce qui assure aux étiquettes une protection mécanique efficace contre le déchirement, en même temps que le robinet est protégé contre toute manipulation accidentelle. Malheureusement, cette disposition interdit toute possibilité de lecture optique automatique des inscriptions portées sur les étiquettes puisque celles-ci restent masquées par l'enveloppe de la tulipe de protection du robinet. Aussi, la nature généralement métallique de la tulipe exclut toute possibilité d'utiliser des étiquettes électroniques pourvues de dispositifs d'émission d'ondes radioélectriques par exemple, car l'enveloppe métallique se comporte comme un écran opaque aux ondes électromagnétiques.

WO-A-8 604 878 expose un système convenant à l'identification de récipients fermés par un robinet entouré par une tulipe de protection. L'élément d'identification est un code barré retenu dans un boîtier ayant la forme d'un disque, au fond de la tulipe de protection. Il est aussi possible d'utiliser une étiquette électronique à la place du code barré. Il est également envisagé d'enregistrer des données variables dans l'étiquette électronique et dans ce cas, le transfert d'information peut se passer directement par des contacts ou indirectement par un appareil d'interrogation correspondant.

GB-A-2 077 555 expose un système d'identification de bouteille de gaz. Dans ce système, il est obligatoire de disposer l'étiquette fixée sur un anneau à l'extérieur de la tulipe de protection. Par conséquent, l'étiquette risque d'être endommagée.

Le but de l'invention est de palier les inconvénients précités.

A cet effet, l'invention a pour objet un système pour l'identification de récipients fermés par un robinet entouré d'une tulipe de protection comme défini dans la revendication 1.

L'invention a pour principaux avantages qu'elle permet d'une part, une lecture fiable des informations contenues dans les étiquettes quels que soient les mauvais traitements imposés aux récipients lors de leur transport ou lors de leur conditionnement et d'autre part, qu'elle apporte une solution parfaitement adaptée à l'étiquetage dynamique de bouteilles de gaz par exemple.

D'autres caractéristiques et avantages de l'invention apparaîtront ci-après à l'aide de la description qui suit faite en regard des dessins annexés qui représentent :

- Figure 1 : un système d'identification de récipients selon l'invention ;
- Figures 2a et 2b : un exemple de réalisation d'un anneau porteur d'une étiquette électronique selon l'invention ;
- Figure 2c : une coupe suivant un plan vertical de l'anneau 2 ;
- Figures 3a et 3b : deux modes d'introduction possibles de la tête de lecture/écriture à l'intérieur de la tulipe de protection du robinet ;
- Figures 4a et 4b : deux modes de réalisation respectivement du module électronique de l'étiquette et de la tête de lecture/écriture formant le système selon l'invention.

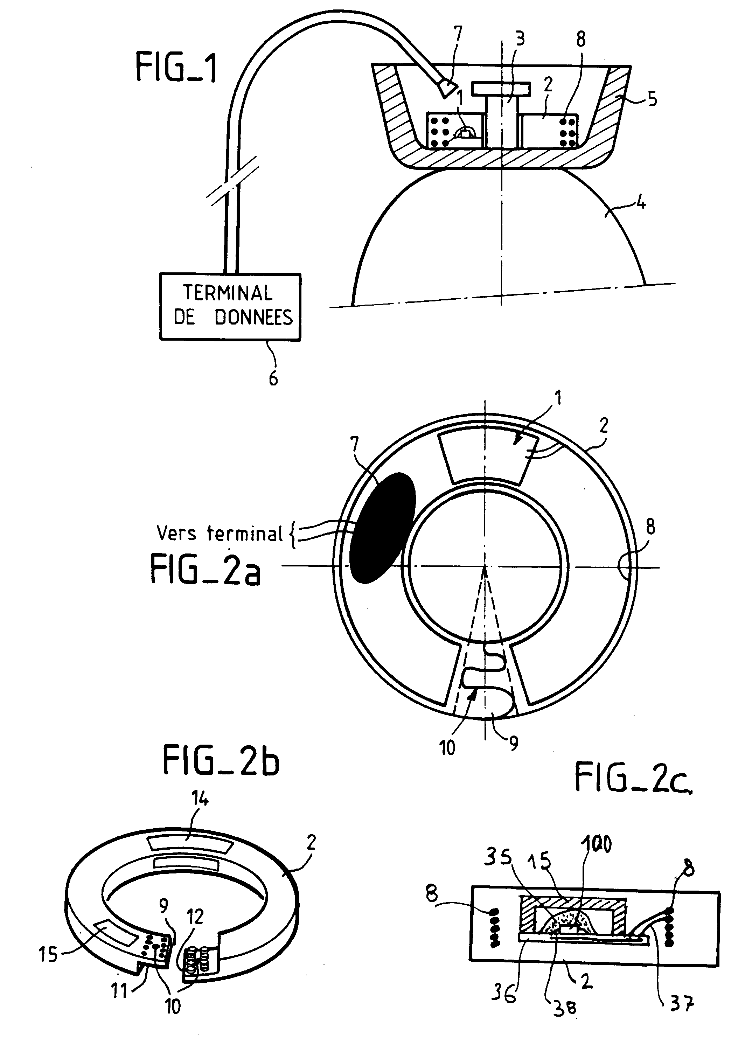

Le système d'identification de récipients, selon l'invention, qui est représenté schématiquement sur la figure 1 comporte essentiellement une étiquette électronique 1, en forme de pastille de petites dimensions, supportée par un anneau 2 entourant un robinet de fermeture 3 d'un récipient 4 ayant sur la figure 1 la forme d'une bouteille de gaz. L'anneau 2 est fixé au fond d'une tulipe de protection 5 du robinet 3. Ce système comprend également un terminal de données 6 qui a pour rôle, au moyen d'une tête de lecture d'écriture 7 amovible, de reconnaître la présence de l'étiquette, de l'identifier et éventuellement d'y inscrire des informations.

Le couplage entre l'étiquette 1 et la tête de lecture/écriture 7 est réalisé électromagnétiquement d'une part, à l'aide d'un bobinage unique 8 noyé dans le corps d'un anneau 2 et relié électriquement à l'étiquette 1 et d'autre part, au moyen de deux bobines en ferrite non représentées placées dans la tête de lecture/écriture 7. Le couplage a lieu lorsque la tête de lecture 7 et l'anneau 2 sont placés sensiblement en vis-à-vis, comme cela est représenté par exemple par le schéma de la figure 2a. Celui-ci montre une étiquette 1 formée par un module électronique 100. Le module électronique est couplé au bobinage 8. Le module et le bobinage sont noyés tous deux à l'intérieur d'une résine en matière plastique formant l'anneau 2. Dans ce mode de réalisation, la forme de la bobine épouse sensiblement celle de l'anneau 2 pour offrir une surface au rayonnement électromagnétique maximum. Dans une variante préférée, le bobinage 8 comporte dans ce but des brins qui sont déployés aux périphéries extérieures et intérieures de l'anneau. Ces brins se bouclent les uns aux autres de telle manière que la surface de la couronne formée par l'anneau constitue la surface utile de transmission des ondes électromagnétiques. L'antenne ainsi constituée forme une boucle comme on peut le voir sur la figure 2a.

Pour la transmission des informations entre l'étiquette 1 et la tête de lecture 7 il est donc préférable que cette dernière soit positionnée en regard de la surface intérieure de la bobine 8, en regard de la couronne. L'anneau est amovible et peut être installé sur un parc de bouteilles non encore muni d'un tel système. En effet, pour permettre l'introduction de l'anneau autour du robinet 3, celui-ci est fendu par une fente 9. Il comporte un dispositif de fermeture 10 par clipsage ou rivetage placé de la manière représentée à la figure 2b, et comportant deux embrèvements 11 et 12 destinés à se recouvrir pour former des accroches fermant la fente 9. Pour permettre une introduction aisée de l'anneau 2 autour du robinet 3, l'anneau 2 comporte une zone souple 14 diamétralement opposée à la fente 9 qui autorise une torsion de l'anneau dans cette zone. Cette zone souple est obtenue par exemple en donnant à la section de l'anneau dans la zone 14 une dimension appropriée consistant notamment à réduire ses dimensions. On peut aussi évider l'anneau à l'endroit de cette souplesse. Par contre, l'anneau 2 possède sur une de ses extrémités proche de la fente 9 une zone renforcée 15 réservée au logement de l'étiquette 1. On peut se reporter sur le schéma de la figure 2c pour mieux voir ces détails de réalisation. En effet, dans un mode préféré de réalisation, le module électronique 100 est une puce collée sur un circuit imprimé 36, cette puce étant recouverte d'une goutte de résine de protection. La zone de renforcement 15 est obtenue par exemple en plaçant un capot rigide au dessus de la puce. Le capot peut être métallique. Les fils de contact 37 sont reliés au bobinage 8. Les fils 37 sont reliés aux fils de contact 38 de la puce à travers le circuit imprimé 36.

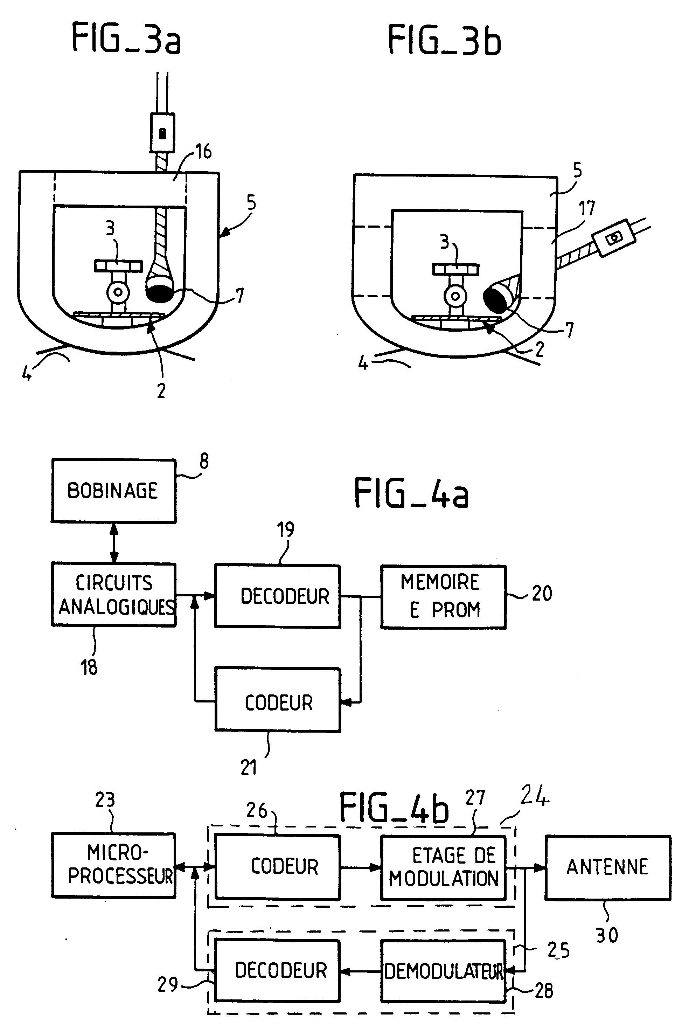

L'introduction de la tête de lecture/écriture à l'intérieur de la tulipe 5 pour transmettre des informations entre le terminal de données 6 et l'étiquette 1 a lieu suivant les modes représentés aux figures 3a et 3b. Dans le mode d'introduction de la figure 3a, la tête de lecture est introduite par l'ouverture supérieure 16 de la tulipe 5. Dans le mode de réalisation de la figure 3b, l'introduction de la tête lecture/écriture 7 a lieu par une fenêtre latérale 17 pratiquée dans le corps même de la tulipe 5.

L'étiquette comporte, de la manière décrite par exemple dans le brevet français 2 623 311, un module électronique composé de circuits logiques et analogiques, et de circuits de mémorisation reliés au bobinage 8. Les circuits analogiques 18 assurent d'une part la captation de l'énergie électromagnétique fournie par la tête de lecture/écriture pour alimenter les circuits internes de l'étiquette. Ils assurent d'autre part la réception des signaux émis par la tête de lecture/écriture et captés par la bobine 8. Les circuits logiques comportent essentiellement un décodeur 19 pour décoder les signaux transmis par la tête de lecture/écriture 7 et les appliquer par l'intermédiaire d'un registre à décalage sur les entrées de données d'une mémoire E²PROM 20, du type de celles commercialisées sous la référence NM9346 de la société de droit américain National Semiconductor par exemple, et un codeur 21 pour transformer les données lues dans la mémoire E²PROM 20 en signaux analogiques pour les transmettre à la tête de lecture/écriture 7.

La tête de lecture/écriture comprend un microprocesseur 23 couplé d'une part, au terminal de données 6 par l'intermédiaire d'un circuit d'interface non représenté et d'autre part, à des dispositifs d'émission 24 et de réception 25 d'ondes électromagnétiques comportant respectivement un codeur d'émission 26 couplé à un étage de modulation 27 et un démodulateur 28 couplé à un décodeur. L'antenne 30 est constituée par une bobine en ferrite. Le tout est placé à l'extrémité d'un flexible muni d'une poignée de préhension pour faciliter l'introduction de la tête de lecture/écriture à l'intérieur de la tulipe. Le flexible a une longueur qui peut varier selon qu'il est destiné à équiper un poste fixe ou un terminal portatif. Naturellement, pour obtenir un fonctionnement fiable du système, la tête de lecture doit être placée de préférence suffisamment proche de l'étiquette.

## Revendications

1. Système pour l'identification de récipients (4) fermés par un robinet (3) entouré par une tulipe (5) de protection, le système comprenant:
- une étiquette électronique (1) munie d'un dispositif d'émission d'ondes électromagnétiques (8) fixé sur un anneau (2) entourant le robinet (3) au fond de la tulipe de protection (5), le dispositif d'émission comprenant un module électronique (100) couplé à un bobinage (8) assurant le couplage électromagnétique de l'étiquette (1) avec une tête de lecture/écriture (7), la forme du bobinage épousant sensiblement celle de l'anneau pour offrir une surface de rayonnement électromagnétique maximum ;
- un terminal de données (6) couplé à la tête de lecture/écriture (7) amovible pouvant être introduite à volonté à l'intérieur de la tulipe (5) directement en regard de l'anneau (2), support de l'étiquette (1), pour transmettre les informations entre le terminal de données (6) et l'étiquette (1).

2. Système selon la revendication 1, caractérisé en ce que l'anneau (2) est fendu par une fente (9) pouvant comporter un dispositif de fermeture (10) fermant ladite fente (9) ou ledit anneau (2).

3. Système selon l'une quelconque des revendications 1 et 2, caractérisé en ce que le bobinage (8) est constitué de brins (8) répartis aux périphéries intérieures et extérieures de l'anneau (2) de manière à former une boucle.

4. Système selon l'une des revendications précédentes, caractérisé en ce que le module électronique (100) et le bobinage (8) sont fixés à l'anneau (2).

5. Système selon la revendication 4, caractérisé en ce que le module électronique (100) et le bobinage (8) sont noyés par moulage dans la matière formant l'anneau (2).

6. Système selon la revendication 1, caractérisé en ce que l'anneau (2) est en matière plastique.

7. Système selon la revendication 1, caractérisé en ce que l'anneau (2) est amovible.

8. Système selon la revendication 2, caractérisé en ce que la fente (9) est formée par deux embrèvements (11, 12) aux extrémités de l'anneau (2).

9. Système selon la revendication 8, caractérisé en ce que le dispositif de fermeture (10) est formé par rivetage des deux embrèvements (11, 12) de l'anneau.

10. Système selon la revendication 2, caractérisé en ce que la fermeture de l'anneau (2) est obtenue par le clipsage des deux extrémités (11, 12) de l'anneau (2).

11. Système selon la revendication 2, caractérisé en ce que l'anneau (2) comporte une première zone (14) souple permettant des torsions, cette zone étant diamétralement opposée à la fente (9).

12. Système selon la revendication 11, caractérisé en ce que la zone souple (14) est obtenue par une réduction des dimensions de l'anneau dans ladite zone.

13. Système selon la revendication 11, caractérisé en ce que la zone souple (14) est obtenue par un évidement de l'anneau dans ladite zone.

14. Système selon l'une quelconque des revendications précédentes, caractérisé en ce que l'anneau (2) comporte une deuxième zone (15) renforcée autour de l'emplacement du module électronique.

15. Système selon la revendication 14, caractérisé en ce que la deuxième zone (15) est renforcée autour de l'emplacement du module électronique.

16. Système selon la revendication 2, caractérisé en ce que le module électronique (100) est noyé dans l'anneau à un emplacement proche de la fente (9) de l'anneau.

17. Système selon l'une quelconque des revendications précédentes, caractérisé en ce que le module électronique (100) est une puce de circuit intégré.

## Patentansprüche

1. System zur Identifizierung von Behältern (4), die mit einem Ventil (3) verschlossen sind, das von einem tulpenförmigen Schutzgefäß (5) umgeben ist, wobei das System umfaßt:
- ein elektronisches Etikett (1), das mit einer Vorrichtung zum Senden elektromagnetischer Wellen (8) ausgestattet ist, die auf einem Ring (2) befestigt ist, der das Ventil (3) am Boden des tulpenförmigen Schutzgefäßes (5) umgibt, wobei die Sendevorrichtung ein elektronisches Modul (100) umfaßt, das mit einer Wicklung (8) gekoppelt ist, die für die elektromagnetische Kopplung des Etiketts (1) mit einem Lese-/Schreibkopf (7) sorgt, wobei die Form der Wicklung im wesentlichen der des Rings entspricht, damit für eine größtmögliche elektromagnetische Strahlungsfläche gesorgt ist;
- ein Datenterminal (6), das an den wegnehmbaren Lese-/Schreibkopf (7) gekoppelt ist, der nach Belieben in das tulpenförmige Schutzgefäß (5) eingebracht werden kann, und zwar direkt gegenüber dem Ring (2), der das Etikett (1) trägt, um die Informationen zwischen dem Datenterminal (6) und dem Etikett (1) zu übertragen.

2. System nach Anspruch 1, dadurch gekennzeichnet, daß der Ring (2) einen Schlitz (9) aufweist, der eine Schließvorrichtung (10) umfassen kann, welche den Schlitz (9) oder den Ring (2) schließt.

3. System nach einem der Ansprüche 1 und 2, dadurch gekennzeichnet, daß die Wicklung (8) aus Fäden (8) besteht, die am Innen- und Außenumfang des Rings (2) verteilt sind und so eine Schleife bilden.

4. System nach einem der vorstehenden Ansprüche, dadurch gekennzeichnet, daß das elektronische Modul (100) und die Wicklung (8) an dem Ring (2) befestigt sind.

5. System nach Anspruch 4, dadurch gekennzeichnet, daß das elektronische Modul (100) und die Wicklung (8) durch Gießen in das Material eingelassen sind, aus dem der Ring (2) besteht.

6. System nach Anspruch 1, dadurch gekennzeichnet, daß der Ring (2) aus Kunststoff besteht.

7. System nach Anspruch 1, dadurch gekennzeichnet, daß der Ring (2) abnehmbar ist.

8. System nach Anspruch 2, dadurch gekennzeichnet, daß der Schlitz (9) aus zwei Versatzungen (11, 12) an den Enden des Rings (2) besteht.

9. System nach Anspruch 8, dadurch gekennzeichnet, daß die Schließvorrichtung (10) durch Vernieten der beiden Versatzungen (11, 12) des Rings gebildet wird.

10. System nach Anspruch 2, dadurch gekennzeichnet, daß der Ring (2) durch das Zusammenklipsen der beiden Enden (11, 12) des Rings (2) geschlossen wird.

11. System nach Anspruch 2, dadurch gekennzeichnet, daß der Ring (2) einen ersten, elastischen Bereich (14) aufweist, der Verdrehungen zuläßt, wobei dieser Bereich dem Schlitz (9) diametral gegenüberliegt.

12. System nach Anspruch 11, dadurch gekennzeichnet, daß der elastische Bereich (14) durch Verringerung der Abmessungen des Rings in diesem Bereich erhalten wird.

13. System nach Anspruch 11, dadurch gekennzeichnet, daß der elastische Bereich (14) durch eine Aussparung des Rings in diesem Bereich erhalten wird.

14. System nach einem der vorstehenden Ansprüche, dadurch gekennzeichnet, daß der Ring (2) einen zweiten Bereich (15) umfaßt, der um die Stelle herum verstärkt ist, an der sich das elektronische Modul befindet.

15. System nach Anspruch 14, dadurch gekennzeichnet, daß der zweite Bereich (15) um die Stelle herum verstärkt ist, an der sich das elektronische Modul befindet.

16. System nach Anspruch 2, dadurch gekennzeichnet, daß das elektronische Modul (100) in den Ring an einer Stelle eingelassen ist, der sich nahe des Schlitzes (9) des Rings befindet.

17. System nach einem der vorstehenden Ansprüche, dadurch gekennzeichnet, daß das elektronische Modul (100) ein Chip einer integrierten Schaltung ist.

## Claims

1. A system for identifying recipients (4) sealed by a tap (3) surrounded by a protective tulip (5), the system comprising:
- an electronic label (1) provided with an electro-magnetic wave emission device (8) fixed onto a ring (2) surrounding the tap (3) at the base of the protective tulip (5), the emission device comprising an electronic module (100) coupled with a winding (8) which provides the electro-magnetic link between the label (1) and a reading/writing head (7), the shape of the winding essentially conforming to that of the ring so as to provide a maximum surface for electro-magnetic radiation;
- a data terminal (6) connected to the moveable reading/writing head (7) which can be introduced as required into the tulip (5) directly facing the ring (2) supporting the label (1), to transmit data between the data terminal (6) and the label (1).

2. System as claimed in claim 1, characterised in that the ring (2) is split by a slit (9) which may have a closing device (10) to close the said slit (9) or the said ring (2).

3. System as claimed in any one of claims 1 and 2, characterised in that the winding (8) is made up of strand elements (8) distributed over the inner and outer peripheries of the ring (2) in such a way as to form a loop.

4. System as claimed in one of the previous claims, characterised in that the electronic module (100) and the winding (8) are fixed to the ring (2).

5. System as claimed in claim 4, characterised in that the electronic module (100) and the winding (8) are embedded by moulding process in the material of which the ring (2) is made.

6. System as claimed in claim 1, characterised in that the ring (2) is of plastics material.

7. System as claimed in claim 1, characterised in that the ring (2) is moveable.

8. System as claimed in claim 2, characterised in that the slit (9) is formed by two rabbets (11, 12) at the ends of the ring.

9. System as claimed in claim 8, characterised in that the closing device (10) is a device for riveting the two rabbets (11, 12) of the ring.

10. System as claimed in claim 2, characterised in that the ring (2) is closed by clipping the two ends (11, 12) of the ring (2).

11. System as claimed in claim 2, characterised in that the ring (2) has a flexible first zone (14) permitting bending, this zone being diametrically opposite the slit (9).

12. System as claimed in claim 11, characterised in that the flexible zone (14) is formed by reducing the dimensions of the ring in the said zone.

13. System as claimed in claim 11, characterised in that the flexible zone (14) is formed by a recess in the ring in the said zone.

14. System as claimed in any one of the previous claims, characterised in that the ring (2) has a reinforced second zone (15) around the location of the electronic module.

15. System as claimed in claim 14, characterised in that the second zone (15) is reinforced around the location of the electronic module.

16. System as claimed in claim 2, characterised in that the electronic module (100) is embedded in the ring at a location close to the slit (9) of the ring.

17. System as claimed in any one of the previous claims, characterised in that the electronic module (100) is an integrated circuit chip.
